Europäisches Patentamt

European Patent Office

Office européen des brevets

(11) Veröffentlichungsnummer: **0 011 149**
**B1**

(12) **EUROPÄISCHE PATENTSCHRIFT**

(45) Veröffentlichungstag der Patentschrift: **28.04.82**

(21) Anmeldenummer: **79104017.3**

(22) Anmeldetag: **18.10.79**

(51) Int. Cl.³: **G 11 B 5/55**, G 11 B 21/08,
H 02 K 41/02

(54) Vorrichtung zum Positionieren von Magnetköpfen.

(30) Priorität: **26.10.78 DE 2846599**

(43) Veröffentlichungstag der Anmeldung:
**28.05.80 Patentblatt 80/11**

(45) Bekanntmachung des Hinweises auf die Patenterteilung:
**28.04.82 Patentblatt 82/17**

(84) Benannte Vertragsstaaten:
**AT BE CH DE FR GB NL SE**

(56) Entgegenhaltungen:
**DE - U - 7 716 251**
**GB - A - 1 381 143**
**US - A - 3 136 934**
**US - A - 3 505 544**

(73) Patentinhaber: **BASF Aktiengesellschaft**
**Carl-Bosch-Strasse 38**
**D-6700 Ludwigshafen (DE)**

(72) Erfinder: **Manzke, Klaus**
**Schulstrasse 10**
**D-6721 Westheim (DE)**
Erfinder: **Brotzler, Roland**
**Langstrasse 34**
**D-6701 Hochdorf-Assenheim 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

### Vorrichtung zum Positionieren von Magnetköpfen

Die Erfindung betrifft eine Vorrichtung zum Positionieren von Magnetköpfen auf ausgewählte Spuren von mindestens einer Magnetplatte entsprechend dem Oberbegriff des Anspruchs 1.

Mit dem deutschen Gebrauchsmuster G 77 16 251 ist eine Vorrichtung der oben näher bezeichneten Art bekannt, wobei es sich jedoch um eine Schwenk-Positionierungseinrichtung handelt. Schwenk-Positioniereinrichtungen sind nicht für alle Positionieranwendungen einsetzbar, insbesondere aus Gründen des Volumenbedarfs und der gewünschten Genauigkeit, da ein Fehlwinkel unvermeidbar ist, wodurch auch das Flugverhalten des Kopfes in Magnetplattenspeichern beeinträchtigt wird. Aus der Zeitschrift Feinwerktechnik + Micronic 77, 1973, Heft 4, "Positionierer für Plattenspeicher" von O. E. Olbrich ist es prinzipiell bekannt, ebene Wicklungen für Linearmotor-Magnetkopf-Positionierer zu verwenden. Es ist beispielsweise bekannt, daß eine solche ebene Wicklung in einem rahmenförmigen Wagen befestigt ist, der spielfrei geführt ist und die Magnetköpfe trägt. Die Stromzuführung erfolgt dabei zweckmäßig über flexible Leitungen. Diese prinzipiellen Angaben reichen nicht aus, ohne weiteres ein verbessertes Positioniersystem zu realisieren.

Es ist Aufgabe der vorliegenden Erfindung, eine Positioniervorrichtung von geringem Volumen und geringem Energiebedarf bei wirtschaftlich günstiger Herstellbarkeit bereitzustellen.

Gemäß der Erfindung wird die Aufgabe durch die Merkunsale des Anspruchs 1 gelöst.

Weitere Ausbildungen der Erfindung sind in den abhängigen Anspruchen enthalten.

Insgesamt wird eine Positioniervorrichtung hergestellt, die eine sehr geradlinige Positionierbewegung ermöglicht und so die Gegenstände, insbesondere Schreib-/Lese-Magnetköpfe in Datenspeichersystemen, in ihrer Ideallage über den gesamten Postionierbereich hinweg zuverlässig positionierbar macht. Darüber hinaus wird ein äußerst geringer Leistungsbedarf bei niedriger Verlustleistung erreicht. Die erfindungsmäßige Positioniervorrichtung ermöglicht damit den Einsatz in einem kompakten und preisgünstigen Magnetplattenspeichersystem.

Einzelheiten der Erfindung sind nachstehend anhand von Ausführungsbeispielen erläutert und in Zeichnungen dargestellt.

Es zeigen:

Fig. 1 einen Längsschnitt durch eine Positioniervorrichtung in einem Magnetplattenspeicher mit Magnetköpfen und Teilen der Magnetplatten.

Fig. 2 einen Querschnitt durch die Positioniervorrichtung mit Teilen der Magnetplatten gemäß Figur 1, jedoch ohne Magnetköpfe.

Fig. 3 eine Draufsicht auf das Magnetsystem, die ebene Spule, das Führungsgestänge und den Gehäuserahmen.

Fig. 4 einen Teilschnitt in Längsrichtung einer Baugruppe der Vorrichtung, bestehend aus Gehäuserahmen, unterem Flußleitstück und Permanentmagneten.

Fig. 5 eine Seitenansicht und Stirnansicht einer weiteren Ban gruppe der Vorrichtung, bestehend aus Kopfträgerführungsschlitten, einer ebenen flachen Spule, den Führungselementen, dem Führungsgestänge und dem oberen Flußleitstück.

Fig. 6 eine schematische Darstellung einer Kopfträgereinheit, bestehend aus Kopfträger und Magnetköpfen für zwei Magnetplatten.

Fig. 7 eine schematische Ansicht in Längsrichtung des Gehäuserahmens und des kompletten Magnetsystem, mit Angabe der Magnetpolung und Magnetflußrichtungen.

Fig. 8 eine perspektivische Darstellung der Vorrichtung in einer weiteren Ausführung der Vorrichtung, teilweise im Schnitt.

Die Positioniervorrichtung für eine Magnetplattenspeicher-Einheit besteht im wesentlichen aus folgenden Teilen, der Kopfträgereinheit 1, dem Führungsteil 2, den Führungsstangen 3, den Führungslagern 4, einer Befestigungseinrichtung 5 für die Führungsstangen 3 der ebenen flachen Spule 6, den Magneteinheiten 7 und 8 und den Flußleitstücken 9 und 10, wobei letztere zusammen mit den Magneteinheiten nebeneinanderliegende Arbeitsluftspalte 11 und 12 bilden, sowie dem Rahmen 13.

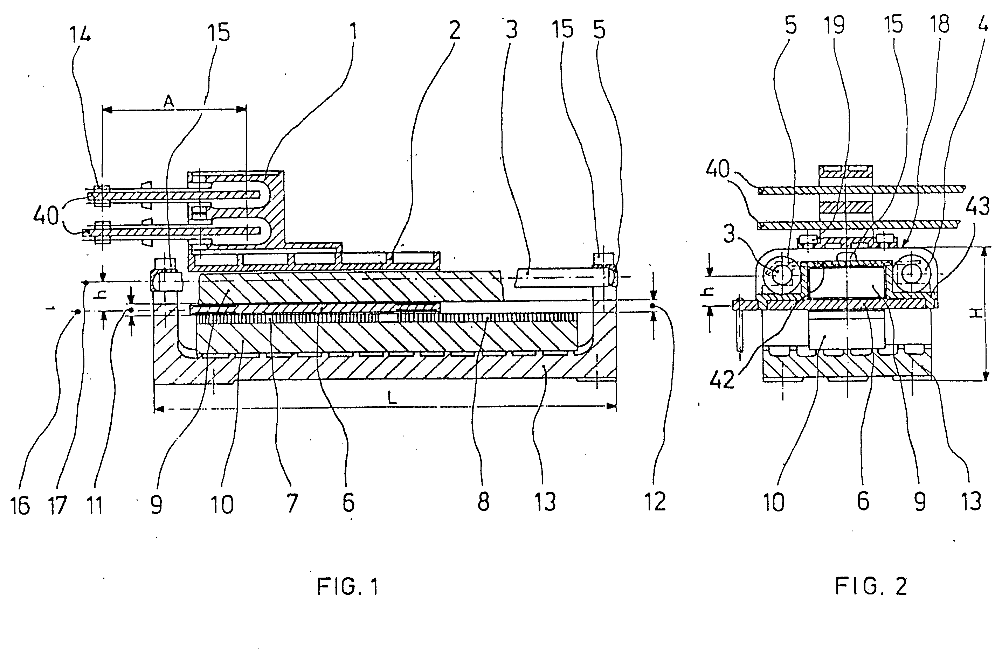

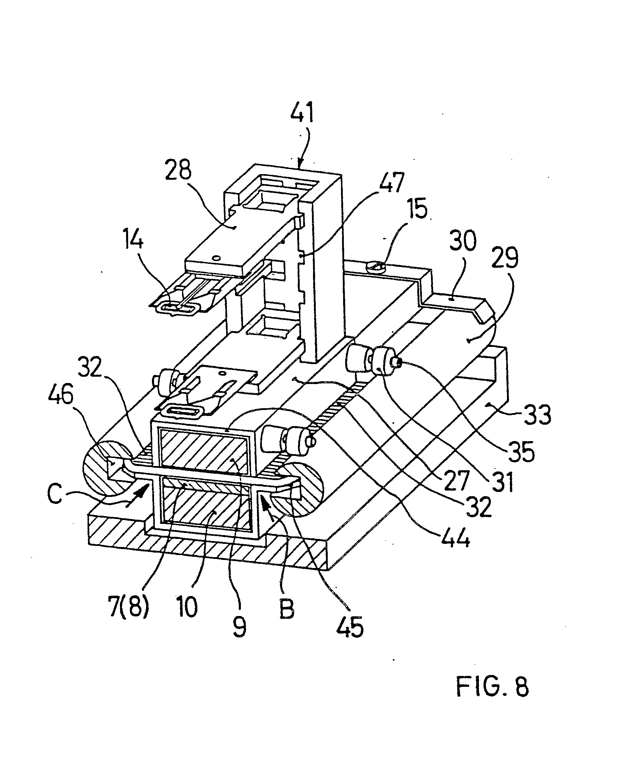

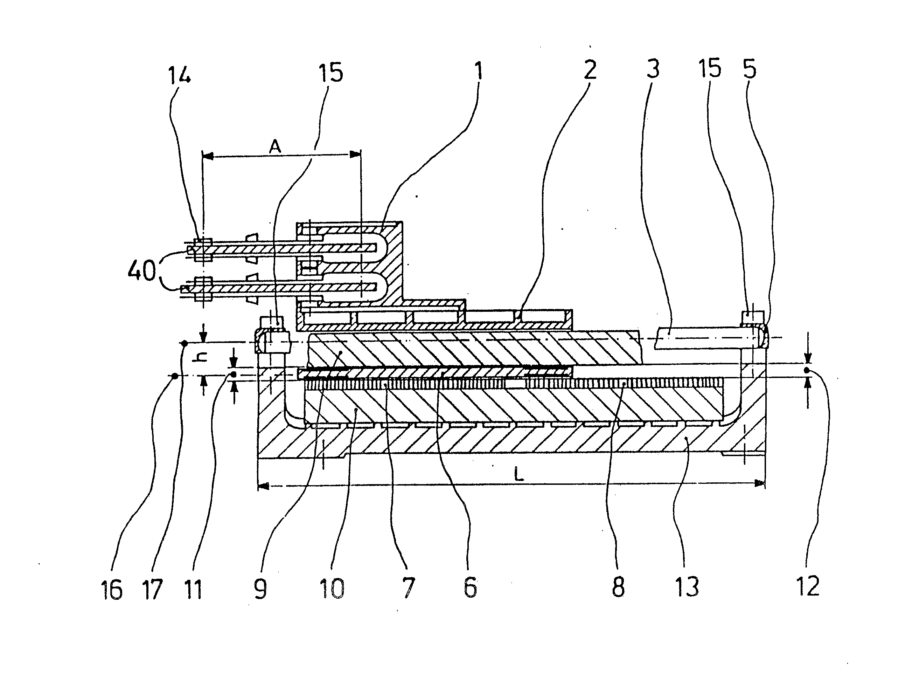

Am Kopfträger 1 sind Magnetköpfe 14 vorgesehen, von denen jeweils zwei Köpfe den beiden Seiten einer Magnetplatte 40 zugeordnet sind. Im Falle der Figuren 1, 2 und 6 ist eine Kopfträgereinheit 1 für zwei solcher Magnetplatten 40 dargestellt, es ist natürlich auch möglich, wie in Figur 6 angedeutet, eine Kopfträgereinheit 41 mit auswechselbaren Kopfträgern 28 zu verwenden, womit die Anzahl der jeweilig benötigten Kopfträger 28 an die jeweilige Anzahl der Magnetplatten anpaßbar wird.

Die Kopfträgereinheiten 1 und 41 sind um den Positionierweg A verschiebbar und mit einem Führungsteil 2 bzw. 27 (Figur 8) verbunden. Das Führungsteil 2 ist als Einfachhohlkörper 42 mit Flanschfortsätzen 43 ausgebildet, wobei die flache Spule 6 einschließlich ihres Tragteils die offene Seite eines Formkörpers abschließt, so daß der Hohlkörper 42 erst dadurch gebildet wird. Die flache Spule 6 ist mit den Flanschfortsätzen verbunden, in Figur 2 an der Unterseite derselben. An der Oberseite der Fortsätze sind in der Ausführung der Figur 2 Führungslager 4 in Form von Kugelbuchsenlagern befestigt, durch die die Führungsstangen 3 hindurchgeführt sind, so daß die aus Kopfträgereinheit 1, Führungsteil 2 und Spule 6 gebildete Bewegungseinheit relativ zu den Fuhrungsstangen 3 dem Rahmen 13 usw. bewegbar, insbesondere längsverschieblich ist. Es sind auch Gleitlager als Führungslager verwendbar. Die mit 7 und 8 bezeichneten Magneteinheiten können Permanentmagnete, aber auch Elektromagnete sein, die innerhalb des Führungsteils 2 bzw. unterhalb der Spule 6 raumsparend angeordnet sind. Damit wird außerdem der weitere Vorteil erhalten, daß die an die Bewegungseinheit beim Verschiebevorgang angreifenden Kraftvektoren nur etwas unterhalb der Ebene liegen, in der die Einheit gelagert ist, die Höhendifferenz ist die Höhe h wie in Figur 1 und 2 gezeigt. Je kleiner h wird, um so idealer werden die Antriebsverhältnisse im Sinne einer optimalen Führungsstabilität ohne des Auftreten von Kippmomenten wesentlicher Größe.

Eine weitere Ausführung der Vorrichtung wird im folgenden anhand der Figur 8 erläutert. Gleiche Teile sind mit denselben Bezugsziffern versehen. Im Unterschied zur Ausführung der Figuren 1—7 ist ein als Doppelhohlkörper ausgebildetes Führungsteil 44 vorgesehen, das ebenfallshier in Höhe der horizontalen Symmetrieebene des Hohlkörpers — seitliche Flanschfortsätze 45 besitzt. Wie durch Längsschraffur zu erkennen, befindet sich eine ebene flache Spule 32 auf der Oberseite der Fortsätze 45, wobei die Verbindungsleiter nicht sichtbar sind, aber durch nicht dargestellte Durchbrechungen im Führungsteil 44 durch diesen hindurchgeführt sind.

Die flachen, ebenen Spulen 6 und 32, können auf jede geeignete Art und Weise hergestellt sein, z.B. als Leiterringbahnen, die auch durch Ätzverfahren als gedruckte Schaltungen herstellbar sind. Es ist auch günstig, die Leiterbahnen aus einer auf einem nichtleitenden und unmagnetischen Träger geeignet befestigten Aluminium- oder Kupferfolie herzustellen. Es ist ferner möglich, die Spulen auch aus mehreren übereinander angeordneten Schichten oder Trägern herzustellen.

In der Ausführung in Figur 8 sind die Fortsätze 45 innerhalb von Längsnuten 46 in Führungsstangen 29 reibungsfrei verschiebbar. Am Führungsteil 44 sind oben beispielsweise Führungsrollen 31 auf festen Achsen 35 vorgesehen, die auf den Führungsstangen 29 mit höchstens geringfügiger Reibung laufen. Es ist zweckmäßig, drei solcher Rollen in Dreipunktanordnung vorzusehen.

Zur zweckmäßig weiteren Lagerung des Führungsteils 44 können an den Stellen der Pfeile C und B unter 45° angestellte Achsenlager vorgesehen sein, z.B. feststehende Lager auf der einen Seite und auf der anderen Seite mittels ebenfalls nicht dargestellter Feder in Normalposition angedrückter schwenkbare Lager. Dadurch wird kosten- und einstellungsmäßig eine äußerst günstige Lagerung ermöglicht die annähernd reibungsfrei ist. Die Flußleitstücke 9 und 10 sind in jedem der Hohlräume des Führungsteils 44 angeordnet. In Figur 8 sind alle bewegten Teile in Ansicht und alle ortfesten Teile mit Schnittdarstellung gezeigt.

Der Rahmen ist mit 33 bezeichnet, worauf mittels der Schraube 15 und dem Klemmblech 30 Führungsstangen 29 und Flußleitstücke 9 und 10 befestigt sind.

Die Kopfträgereinheit 41 ist in Figur 8 mit dem Führungsstück 44 einstückig ausgeführt und besitzt außer zwei Kopfträgern 28 mit Köpfen 14 auch Haltenuten 47 für zwei weitere Kopfträger, so daß maximal vier Kopfträger für insgesamt 7 Magnetköpfe für 4 Magnetplatten montierbar sind.

Die zu den Ausführungsbeispielen beschriebenen Bauteile sind zweckmäßig wie nachstehend beschrieben in drei Baugruppen vormontierbar und in entsprechend vormontierten Einheiten zur vollständigen Vorrichtung zusammensetzbar. Die Beschreibung dieser Baugruppen erfolgt anhand der Figuren 1 bis 7.

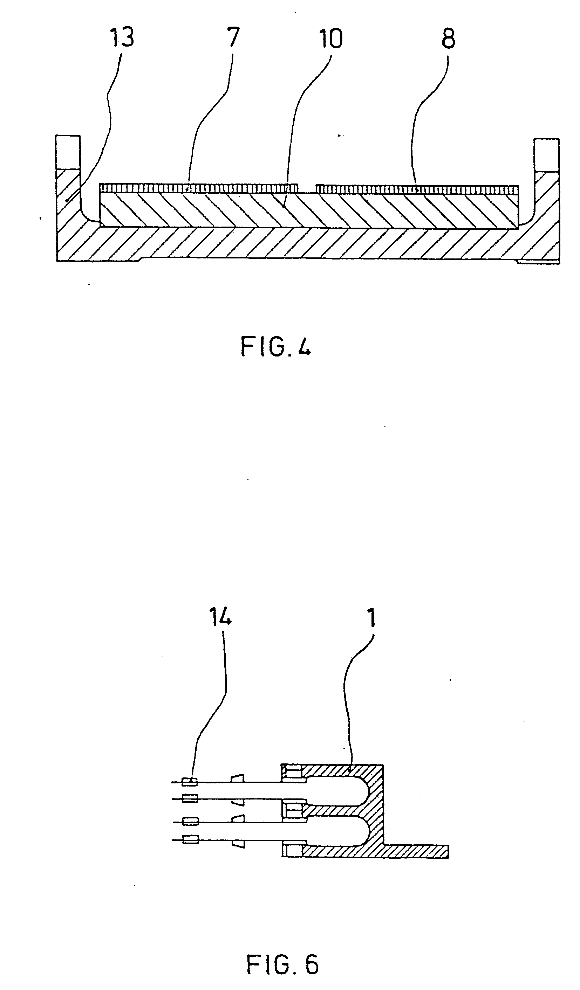

Baugruppe 1 (Figur 4) besteht aus dem Gehäuserahmen 13, dem Flußleitstück 10 und den Permanentmagneten 7 und 8. Hierbei sind die Permanentmagnete 7 und 8 auf das Flußleitstück 10 aufgeklebt und dies ist wiederum auf dem Gehäuserahmen 13 befestigt.

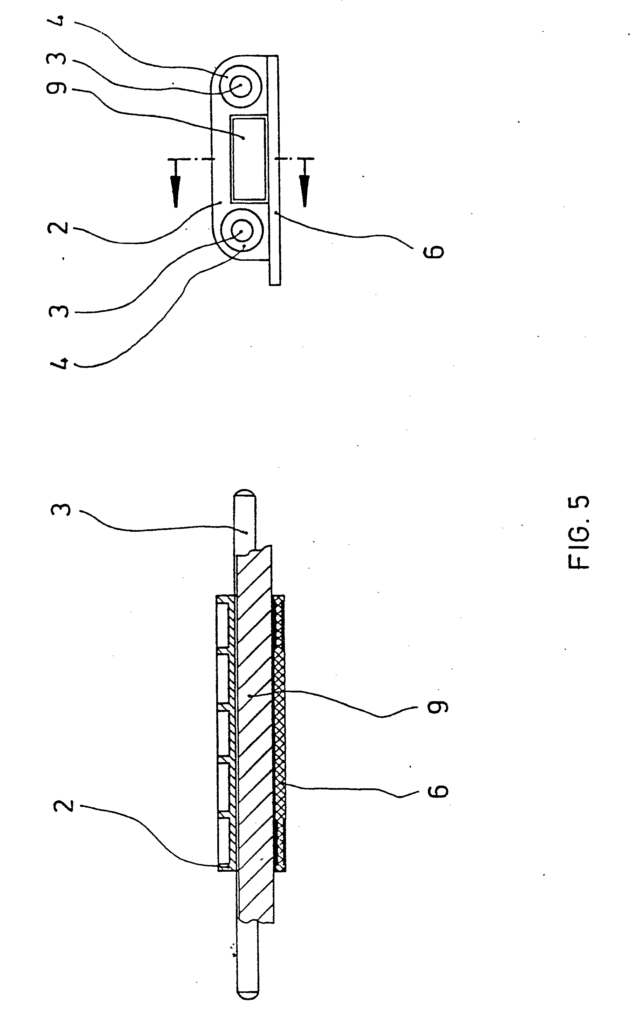

Baugruppe 2 (Figur 5) besteht aus dem Führungsschlitten 2, der ebenen flachen Spule 6 und den Führungslagern 4. Diese drei Komponenten sind fest miteinander verbunden. In diese vormontierte Baugruppe wird das Flußleitstück 9, wie in Figur 5 gezeigt, durch den beidseitig offenen Hohlraum des Führungsschlittens 2 hindurchgesteckt und dann die Führungsstangen 3 durch die montierten Führungslager 4 hindurchgesteckt.

Baugruppe 3 (Figur 6) besteht aus der Kopfträgereinheit 1 und den Magnetköpfen 14.

Als nächster Schritt wird die komplette Baugruppe 2 von oben in die Baugruppe 1 eingesetzt und mittels zweier Schrauben 15 und zweier Klemmbleche 5, wie in Figur 1 und Figur 2 gezeigt, verschraubt, so daß das obere Flußleitstück 9 und die Führungsstangen 3 fest mit der Baugruppe 1 verbunden sind.

Die soweit montierte Vorrichtung hat die Baulänge L und die Bauhöhe H und kann über einen Abstand A positionieren und stellt mit dem Abstand h, der gebildet wird durch die Kraftangriffsebene 16 und die Führungsebene 17 (entspricht in etwa der Massenschwerpunktebene der bewegten Teile) einen Aufbau dar, der beim Positionieren nur ein höchstens geringes Kippmoment auftreten läßt.

Die teilmontierte gerade beschriebene Vorrichtung stellt schon eine für sich funktionierende Einheit dar und wird zuletzt mit der Baugruppe 3 (Figur 6, welche auf die Montageebene 18 des Kopträgerführungsschlittens 2 aufgesetzt wird und mit diesem mit 3 Schrauben 19 fest verschraubt wird, fest verbunden (Figur 1 und Figur 2). Die Baugruppe 3 (Figur 6) kann entsprechend der Bestückung des Magnetplattenspeichers mit 1, 2 oder 3 Magnetplatten in der Bauhöhe und der Magnetkopfbestückung unterschiedlich ausgeführt sein.

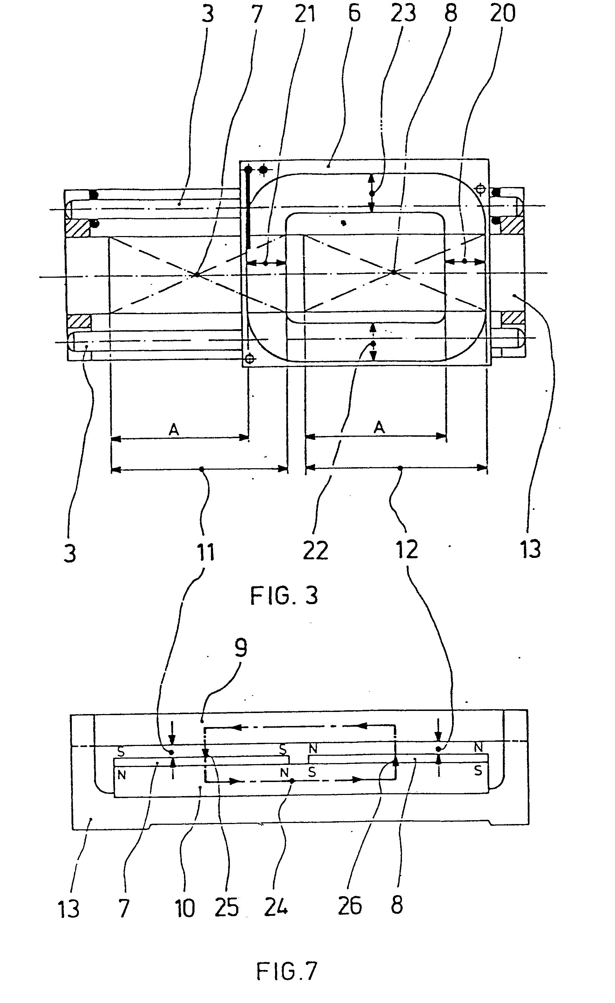

Das Antriebssystem für beide Ausführungen der Positioniervorrichtung ist prinzipiell aus den Figuren 3 und 7 ersichtlich. Figur 7 zeigt den Gehäuserahmen 13 oder 33 mit angebrachtem Magnetsystem z.B. Bestehend aus flachen Permanentmagneten 7 und 8, die hintereinander angeordnet sind, und Flußleitstücken 9 und 10. Ausgehend von den entgegengesetzt angeordneten Polen der Permanentmagnete 7 und 8 verläuft der magnetische Fluß gemäß der Linie 24 durch die Arbeitsluftspalte 11 und 12. Flußrichtung ist Pfeil 25 im Luftspalt 11 und Pfeil 26 im Luftspalt 12. Der Rahmen 13 bzw. 33 muß jedoch aus magnetisch nichtleitendem Material, z.B. einer Aluminium-Legierung bestehen, damit ein magnetischer Kurzschluß vermieden wird.

Da die Querstromleiter 21 und 20 beim Bestromen der Spule 6 entgegengesetzten Stromfluß aufweisen und über den gesamten Positionierhub A den jeweils zugehörigen Arbeitsluftspalt nicht verlassen (Querstromleiter 20 verbleiben im Arbeitsluftspalt 12 und Querstromleiter 21 verbleiben im Arbeitsluftspalt 11) und die Arbeitsluftspalte ebenfalls einen entgegengesetzt gerichteten Magnetfluß aufweisen, wird auf die jeweiligen Querstromleiter 20 bzw. 21 eine über den gesamtem Positionierbereich A in Größe und Richtung gleichbleibende Vorschubkraft ausgeübt, deren Kraftvektoren im wesentlichen in der Ebene der Führungsebene — wie in Figur 8 realisiert — liegen. Die Längsstromleiter 22, 23 bleiben ständig außerhalb der Arbeitsluftspalte 11 und 12.

Es wird noch einmal betont, daß der Kraftangriffsvektor des Antriebssystems (die Ebene der Spule) und die Führungsebene des Führungsteils in höchstens geringem Abstand übereinander angeordnet sind — im Idealfall fallen die Führungsebene, die Schwerpunktsebene und die Kraftangriffsebene zusammen, so daß keinerlei Kippmomente auf die Bewegungseinheit insbesondere auf die Magnetköpfe wirken können. Mit Ausnahme der Schwerpunktsebene ist das Zusammentreffen dieser idealen Bedingungen in der Ausführung in Figur 8 verwirklicht.

Durch die im Verhältnis zum geforderten Positionierhub A klein gehaltenen Abmessungen in allen Dimensionen Können auch die Massen der bewegten Teile (hauptsächlich die der Kopfträgereinheit) gering gehalten werden und somit kann bei akzeptablen Zugriffszeiten ein geringer Leistungsverbrauch erzielt werden, der unter anderem auch dadurch möglich wird, daß die wie oben erläutert ausgeführte Spule mit ihrem Trägerkörper in den Führungsteil integriert ist und somit nicht mehr als zusätzliche Masse bewegt werden muß.

Eine günstige wirtschaftliche Herstellbarkeit in Serienfertigung wird dadurch ermöglicht, daß z.B. die Flußleitstücke des Permanentmagnetsystems aus nur abzulängenden Flachstahlstücken bestehen und die Permanentmagnete eine einfache Quadergeometrie haben. Dadurch wird der Aufwand für Werkzeuge gering gehalten und der Zusammenbau der Teile wird unproblematisch. Die Spulen 6 bzw. 32 können wie oben erläutert zweckmäßig ähnlich einer mehrlagigen gedruckten Schaltung oder z.B. aus Aluminiumfolie gefertigt werden. Die sonstigen Teile können ohne Ausnahme aus Kunststoff- oder Metall-Preßund/oder Gußteilen bestehen.

In den beschriebenen Ausführungsformen kann die flache ebene Spule 6,32 vorteilhaft aus eloxierter Aluminiumfolie mit den Abmessungen 2,5 mm × 0,05 mm dick gewickelt sein, hierbei wird ein optimaler Füllfaktor erzielt, da die nur ca. 3 $\mu$m betragende Eloxalschicht als Windungsisolierung wirkt. Ferner ermöglicht die eloxierte Aluminiumfolie bei vorgegebenem Wickelraum eine Unterbringung einer max. möglichen Windungszahl bei sehr geringer Masse, aufgrund der unterschiedlichen spezifischen Gewichte von Aluminium gegenüber Kupfer, da die Spule ein zu bewegendes und zu beschleunigendes Teil der Vorrichtung darstellt. Bei einer Wickelhöhe von 10 mm ist eine Windungszahl von 180 möglich, wobei der Leiterquerschnitt eine Dauerstrombelastbarkeit von 2 Ampere ermöglicht.

Bei einer mittleren Luftspaltinduktion von ca. 3000 Gauß kann bei den vorstehenden Werten eine Zugriffszeit von Spur zu Spur in der Größenordnung von 3 ms erreicht werden, bei einer mittleren Zugriffszeit von ca. 35 bis 40 ms und einer Zugriffszeit über den gesamten Datenspurbereich von 70 ms. Während mit der Ausführung nach Figur 1 bis 3 Beschleunigungswerte der Kopfträgereinheit von nahe 4 g möglich sind, wurden mit der Ausführung in Figur 8 Beschleunigungswerte über 4 g leicht erreicht. Durch die erfindungsgemäße Bauweise der Vorrichtung ist praktisch eine Verringerung der Baulänge gegenüber bekannten Vorrichtungen um ca. 50 % erzielbar.

Eine ausreichend hohe Magnetflußdichte wird erreicht, wenn im Magnetmaterial ein hoher Energieinhalt bei geringer Entmagnetisierung und kleinem Volumen eingesetzt wird. Dauermagnetplättchen mit hohem Energieprodukt $(B.H)_{max}$ und hoher Unempfindlichkeit gegenüber entmagnetisierenden Magnetfeldern auf Basis von Kobalt und seltenen Erden erfüllen diese Voraussetzungen. Es sind jedoch auch andere geeignete Magnetwerkstoffe verwendbar. Die verwendeten Plättchen haben eine geringe Dicke gegenüber der Dicke des oder der Flußleitstücke, z.B. im Dickenverhältnis von 1:8.

Für die beschriebenen Ausführungsformen kann der Spulenträger vorteilhaft aus einer Magnesiumlegierung gefertigt werden, die insbesondere mit der in Figur 8 gezeigten Spulenkörpergeometrie eine außerordentlich hohe Steifigkeit bei geringer Körpermasse gewährleistet. Es kann jedoch auch jede andere festigkeitsmäßig geeignete Material-Konstruktions-
Kombination eingesetzt werden (z.B. hochfeste
aushärtende Kunststoffe im Spritz-Preßverfahren, ggfs. mit Glas- oder Kunststoffasereinlagen).

**Patentansprüche**

1. Vorrichtung zum Positionieren von Magnetköpfen (14) auf ausgewählte Spuren von mindestens einer Magnetplatte in einem Magnetplattenspeicher mit einer Magnetfeldanordnung, die aus zwei parallel beabstandeten, ebenen Flußleitstücken (9, 10) und plattenförmigen Magneten (7, 8) besteht, welche innerhalb der beiden Flußleitstücke (9, 10) angeordnet sind und die zwei koplanare, zu den Flußleitstücken (9, 10) parallele Luftspalte (11, 12) mit zueinander entgegengesetzten Flußrichtungen (25, 26) bilden, in denen eine ebene Spule (6, 32) senkrecht zur Flußrichtung bewegbar ist, dadurch gekennzeichnet, daß ein die Magnetköpfe (14) tragender, linear geführter Hohlkörper (42, 44) zumindest eines (9) der Flußleitstücke umschließt und die ebene Spule (6) trägt.

2. Vorrichtung nach Anspruch 1, dadurch gekennzeichnet, daß beide Flußleitstücke (9, 10) innerhalb des Hohlkörpers (42, 44) angeordnet sind.

3. Vorrichtung nach Anspruch 1 oder 2, dadurch gekennzeichnet, daß der Hohlkörper (42, 44) mit einem flanschartigen äußeren Fortsatz ausgebildet ist, der die Spule trägt.

4. Vorrichtung nach Anspruch 2, dadurch gekennzeichnet, daß der Hohlkörper (44) aus zwei im wesentlichen gleichgroßen und gleichgeformten Hohlkörpernteilen mit rechteckigem Querschnitt besteht, die miteinander verbunden sind.

5. Vorrichtung nach einander Anspruch 1—4, dadurch gekennzeichnet, daß der Hohlkörper (42, 44) auf zwei Führungsstangen (3 bzw. 29) verschiebbar gelagert ist.

6. Vorrichtung nach einem oder mehreren der Ansprüche 1—5, dadurch gekennzeichnet, daß der Hohlkörper (44) mit dem Kopfträger (41) einstückig ausgebildet ist.

**Claims**

1. A device for positioning magnetic heads (14) over preselected tracks on at least one magnetic disc in a memory processing unit, including a magnet assembly consisting of two parallel, flat flux-conducting members (9, 10) and flat magnets (7, 8) that are arranged between the two flux-conducting members (9, 10) and form two coplanar air gaps (11, 12) which are parallel to the flux-conducting members (9, 10) and in which the directions of flux are opposite one another and in which a flat coil (6, 32) can be moved at right angles to the direction of flux, characterized in that a linearly guided hollow member (42, 44) bearing the magnetic heads (14) encloses at least one (9) of the flux-conducting members and carries the flat coil (6).

2. A device as claimed in claim 1, characterized in that the two flux-conducting members (9, 10) are arranged inside the hollow member (42, 44).

3. A device as claimed in claim 1 or 2, characterized in that the hollow member (42, 44) is provided with flange-like members which carry the coil.

4. A device as claimed in claim 2, characterized in that the hollow member (44) consists of two parts of substantially the same size and shape which are of rectangular cross section and are connected together.

5. A device as claimed in any of claims 1 to 4, characterized in that the hollow member (42, 44) is displaceably mounted on two guide rods (3, 29).

6. A device as claimed in one or more of claims 1 to 5, characterized in that the hollow member (44) is integral with the head mount (41).

**Revendications**

1. Dispositif de positionnement de têtes magnétiques (14) sur des pistes sélectionnées d'au moins un disque magnétique faisant partie d'une mémoire à disques magnétiques à fonctionnement par champ magnétique, comportant deux éléments conducteurs de flux (9, 10) plats et s'étendant parallèlement à une certaine distance l'un de l'autre, et deux aimants (7, 8) en forme de plaque, disposés entre les deux éléments conducteurs de flux (9, 10) qui forment deux entrefers coplanaires (11, 12), parallèles aux dits éléments conducteurs de flux (9, 10), dont les directions de flux (25, 26) respectives sont opposées, dans lesquels est prévue une bobine plate (6, 32) mobile dans une direction perpendiculaire à la direction du flux, caractérisé par le fait qu'un corps creux (42, 44) guidé de façon linéaire supporte les têtes magnétiques (14), entoure au moins l'un (9) des éléments conducteurs de flux et supporte la bobine plate (9).

2. Dispositif selon la revendication 1, caractérisé par le fait que les deux éléments conducteurs de flux (9, 10) sont disposés à l'intérieur du corps creux (42, 44).

3. Dispositif selon l'une des revendications 1 et 2, caractérisé par le fait que le corps creux (42, 44) comporte un appendice externe en forme de collerette qui supporte la bobine.

4. Dispositif selon la revendication 2, caractérisé par le fait que le corps creux (44) est formé de deux parties de section rectangulaire et de dimensions et de forme sensiblement identiques, assemblées entre elles.

5. Dispositif selon l'une des revendications 1 à 4, caractérisé par le fait que le corps creux (42, 44) est monté coulissant sur deux glissières (3 ou 29).

6. Dispositif selon l'une ou plusieurs des revendications 1 à 5, caractérisé par le fait que le corps creux (44) et le support de têtes (41) sont formés d'une seule pièce.

FIG. 1

FIG. 2

0011 149

3　7　21　6　23　8　20

A A

3　11　22　12　13

FIG. 3

9

S S N N
N N S S

13　7　10　25　24　26　8

FIG.7

FIG. 4

FIG. 6

FIG. 5

FIG. 8